# EUROPÄISCHE PATENTSCHRIFT

(11) **EP 1 910 428 B1**
(45) Veröffentlichungstag und Bekanntmachung des Hinweises auf die Patenterteilung: **15.04.2015**
(21) Anmeldenummer: 06776286.4
(22) Anmeldetag: 18.07.2006
(51) Int. Cl.: C08F 8/00, C08F 220/36, C08F 220/10, C08J 3/24, C08J 3/28, C09D 133/04, C08F 8/14, C08F 220/32, C08F 220/14, C08F 212/08, C08F 220/18, C08F 220/20, C09D 133/14

(54) **LATERALE CARBAMATGRUPPEN UND MIT AKTINISCHER STRAHLUNG AKTIVIERBARE GRUPPEN ENTHALTENDE COPOLYMERISATE, VERFAHREN ZU IHRER HERSTELLUNG UND IHRE VERWENDUNG**
COPOLYMERS CONTAINING LATERAL CARBAMATE GROUPS AND GROUPS ACTIVATED BY MEANS OF ACTINIC RADIATION, METHOD FOR THE PRODUCTION THEREOF, AND USE THEREOF
COPOLYMERES CONTENANT DES GROUPES CARBAMATE LATERAUX ET DES GROUPES POUVANT ETRE ACTIVES SOUS L'EFFET D'UN RAYONNEMENT ACTINIQUE, PROCEDE DE PRODUCTION ET UTILISATION DESDITS COPOLYMERES

(30) Priorität: 19.07.2005 DE 102005033622
(43) Veröffentlichungstag der Anmeldung: 16.04.2008
(73) Patentinhaber: BASF Coatings GmbH, 48165 Münster (DE)
(72) Erfinder: RINK, Heinz-Peter, 48153 Münster (DE); NIMZ, Wilma, 45721 Haltern am See (DE); RÖCKRATH, Ulrike, 48308 Senden (DE); WAGNER, Eva, 67098 Bad Dürkheim (DE); RAMESH, Swaminathan, Canton, MI 48187 (US); HARRIS, Paul, J., West Bloomfield, MI 48322 (US)
(74) Vertreter: Leifert & Steffan
(86) Internationale Anmeldenummer: PCT/EP2006/007058
(87) Internationale Veröffentlichungsnummer: WO 2007/009750

(56) Entgegenhaltungen:
- EP-A- 0 594 068
- EP-A2- 0 495 269
- WO-A-01/25356
- WO-A-01/46285
- US-A- 3 479 328
- US-A- 4 064 161
- DATABASE CA [Online] CHEMICAL ABSTRACTS SERVICE, COLUMBUS, OHIO, US; 12. Mai 1984 (1984-05-12), "Photocurable coating materials with low levels of odor" XP002410719 gefunden im STN Database accession no. 1983:489721 & JP 58 025365 A (KANSAI PAINT CO., LTD., JAPAN) 15. Februar 1983 (1983-02-15)

## Beschreibung

### Gebiet der Erfindung

Die vorliegende Erfindung betrifft laterale Carbamatgruppen und mit aktinischer Strahlung aktivierbare Gruppen enthaltende Copolymerisate. Außerdem betrifft die vorliegende Erfindung ein Verfahren zur Herstellung von Copolymerisaten, die laterale Carbamatgruppen und mit aktinischer Strahlung aktivierbare Gruppen enthalten. Des Weiteren betrifft die vorliegende Erfindung die Verwendung der lateralen Carbamatgruppen und mit aktinischer Strahlung aktivierbare Gruppen enthaltenden Copolymerisate und der mit Hilfe des Verfahrens hergestellten Copolymerisate, die laterale Carbamatgruppen und mit aktinischer Strahlung aktivierbare Gruppen enthalten, als thermisch und mit aktinischer Strahlung härtbare Materialien und zu deren Herstellung. Nicht zuletzt betrifft die vorliegende Erfindung die Verwendung der thermisch und mit aktinischer Strahlung härtbaren Materialien zur Herstellung thermisch und mit aktinischer Strahlung gehärteter, duroplastischer Materialien.

### Stand der Technik

Im Rahmen der vorliegenden Erfindung ist unter aktinischer Strahlung elektromagnetische Strahlung, wie nahes Infrarot (NIR), sichtbares Licht, UV-Strahlung, Röntgenstrahlung und Gammastrahlung, insbesondere UV-Strahlung, und Korpuskularstrahlung, wie Elektronenstrahlung, Betastrahlung, Protonenstrahlung, Alphastrahlung und Neutronenstrahlung, insbesondere Elektronenstrahlung, zu verstehen.

Im Rahmen der vorliegenden Erfindung umfasst der Begriff "(Meth)Acrylatcopolymerisate" Acrylatcopolymerisate, Methacrylatcopolymerisate und gemischte Acrylat- und Methacrylatcopolymerisate. Dementsprechend umfasst der Begriff "(Meth)Acrylat" je nach dem monomere Acrylate, Methacrylate und Gemische aus Acrylaten und Methacrylaten oder Acrylatgruppen, Methacrylatgruppen und Acrylat- und Methacrylatgruppen. In gleicher Weise umfasst der Begriff "(Meth)Acryloyl(-Gruppe)" Acryloyl(-Gruppen), Methacryloyl(-Gruppen) und Gemische aus Acryloyl(-Gruppen) und Methacryloyl(-Gruppen).

Copolymerisate, die im statistischen Mittel mindestens eine primäre oder sekundäre Carbamatgruppe und mindestens eine mit aktinischer Strahlung aktivierbare Gruppe enthalten, sind aus der internationalen Patentanmeldung WO 01/46285 bekannt.

Die bekannten Copolymerisate werden hergestellt, indem man
1. nach einer ersten Variante
   1.1 in einem ersten Verfahrensschritt mindestens eine polyfunktionelle Verbindung mit mindestens zwei isocyanatreaktiven, säurereaktiven oder epoxidreaktiven funktionellen Gruppen mit jeweils mindestens einer Verbindung umsetzt, die eine Isocyanatgruppe, Säuregruppe oder Epoxidgruppen sowie mindestens eine mit aktinischer Strahlung aktivierbare Bindung aufweist, wonach man in einem zweiten Verfahrensschritt das resultierende Zwischenprodukt, das im statistischen Mittel noch mindestens eine freie isocyanatreaktive, säurereaktive oder epoxidreaktive funktionelle Gruppe aufweist, mit jeweils mindestens einer Verbindung umsetzt, durch die Carbamatgruppen eingeführt werden; oder
   1.2 in einem ersten Verfahrensschritt mindestens eine polyfunktionelle Verbindung mit mindestens zwei isocyanatreaktiven, säurereaktiven oder epoxidreaktiven funktionellen Gruppen mit jeweils mindestens einer Verbindung umsetzt, durch die Carbamatgruppen eingeführt werden, wonach man in einem zweiten Verfahrensschritt das resultierende Zwischenprodukt, das im statistischen Mittel noch mindestens eine freie isocyanatreaktive, säurereaktive oder epoxidreaktive funktionelle Gruppe aufweist, mit jeweils mindestens einer Verbindung umsetzt, die eine Isocyanatgruppe, Säuregruppe oder Epoxidgruppen sowie mindestens eine mit aktinischer Strahlung aktivierbare Bindung aufweist;
2. nach einer zweiten Variante
   2.1 in einem ersten Verfahrensschritt mindestens ein Polyisocyanat, eine Polysäure oder ein Polyepoxid mit jeweils mindestens einer Verbindung, die mindestens eine mit aktinischer Strahlung aktivierbare Bindung sowie eine isocyanatreaktive, säurereaktive oder epoxidreaktive funktionelle Gruppe aufweist, umsetzt, wonach man das resultierende Zwischenpodukt, das im statistischen Mittel noch mindestens eine Isocyanatgruppe, Säuregruppe oder Epoxidgruppe aufweist, in einem zweiten Verfahrensschritt mit jeweils mindestens einer Verbindung, die mindestens eine Carbamatgruppe oder mindestens eine in Carbamatgruppen umwandelbare funktionelle Gruppen sowie eine isocyanatreaktive, säurereaktive oder epoxidreaktive funktionelle Gruppe aufweist, umsetzt; oder
   2.2 in einem ersten Verfahrensschritt mindestens ein Polyisocyanat, eine Polycarbonsäure oder ein Polyepoxid mit jeweils mindestens einer Verbindung, die mindestens eine Carbamatgruppe oder mindestens eine in Carbamatgruppen umwandelbare funktionelle Gruppen sowie eine isocyanatreaktive, säurereaktive oder epoxidreaktive funktionelle Gruppe aufweist, umsetzt, wonach man das resultierende Zwischenprodukt, das im statistischen Mittel noch mindestens eine Isocyanatgruppe, Säuregruppe oder Epoxidgruppe aufweist, in einem zweiten Verfahrensschritt mit jeweils mindestens einer Verbindung, die mindestens eine mit aktinischer Strahlung aktivierbare Bindung sowie eine isocyanatreaktive, säurereaktive oder epoxidreaktive funktionelle Gruppe aufweist, umsetzt; oder
3. nach einer dritten Variante mindestens ein Polyisocyanat, eine Polysäure oder ein Polyepoxid in einem Eintopfverfahren mit mindestens einer Verbindung, die mindestens eine Carbamatgruppe oder mindestens eine in Carbamatgruppen umwandelbare funktionelle Gruppen sowie eine isocyanatreaktive, säurereaktive oder epoxidreaktive funktionelle Gruppe aufweist, und mindestens einer Verbindung, die mindestens eine mit aktinischer Strahlung aktivierbare Bindung sowie eine isocyanatreaktive, säurereaktive oder epoxidreaktive funktionelle Gruppe aufweist, umsetzt.

Nähere Angaben zu den Einzelheiten der Synthese und der Struktur der resultierenden Copolymerisate, insbesondere der (Meth)Acrylatcopolymerisate, werden nicht gemacht.

Die bekannten Copolymerisate werden für die Herstellung von thermisch und mit aktinischer Strahlung härtbaren Materialien verwendet. Bekanntermaßen wird die gemeinsame Anwendung der thermischen Härtung und der Strahlenhärtung von der Fachwelt auch als "Dual-Cure" bezeichnet.

Die bekannten Dual-Cure-härtbaren Materialien dienen insbesondere der Herstellung von Dual-Cure-gehärteten, duroplastischen Materialien.

Bei der bekannten Herstellweise ist es von Nachteil, dass sowohl die Carbamatgruppen als auch die mit aktinischer Strahlung aktivierbaren Gruppen nachträglich durch polymeranaloge Reaktionen in zuvor gebildete reaktive Oligomere oder Polymere eingeführt werden müssen. Bei diesen polymeranalogen Reaktionen können aber unerwünschte Nebenreaktionen, wie Abbau der oligomeren oder polymeren Ausgangsverbindungen, Reaktionen der Ausgangsverbindungen mit sich selbst und/oder Vernetzungen und Gelierungen, auftreten.

Diese unerwünschten Nebenreaktionen können dazu führen, dass die resultierenden bekannten Copolymerisate nur noch eingeschränkt oder gar nicht mehr für die Herstellung von thermisch und mit aktinischer Strahlung härtbaren Materialien geeignet sind, weil sie beispielsweise Verfärbungen, Stippen und/oder eine unerwünscht hohe Viskosität aufweisen, sodass die hieraus hergestellten duroplastischen Materialien besonders hohen Ansprüchen nicht genügen und nicht für technisch und/oder ästhetisch besonders anspruchsvolle Verwendungszwecke in Betracht kommen.

### Aufgabenstellung

Der vorliegenden Erfindung liegt die Aufgabe zugrunde, laterale Carbamatgruppen und mit aktinischer Strahlung aktivierbare Gruppen enthaltende Copolymerisate bereitzustellen, die die Nachteile des Standes der Technik nicht mehr länger aufweisen.

Die lateralen Carbamatgruppen und mit aktinischer Strahlung aktivierbare Gruppen enthaltenden Copolymerisate sollen sich in besonders einfacher und sehr gut reproduzierbarer Weise in weniger Verfahrenschritten herstellen lassen. Sie sollen keine Nebenprodukte oder nur sehr geringe, d. h. technisch nicht relevante, Mengen, an Nebenprodukten enthalten. Dabei soll sich ihr anwendungstechnisches Eigenschaftsprofil in einfacher Weise gezielt einstellen und variieren und optimieren lassen.

Die laterale Carbamatgruppen und mit aktinischer Strahlung aktivierbare Gruppen enthaltenden Copolymerisate sollen besonders breit anwendbar sein. Insbesondere sollen sie sich in besonderem Maße als thermisch und mit aktinischer Strahlung härtbare Materialien oder zu deren Herstellung eignen.

Die Dual-Cure-härtbaren Materialien sollen keine oder nur sehr geringe, d. h. technisch nicht relevante, Verfärbungen und Stippen aufweisen. Sie sollen sehr gut verarbeitbar und applizierbar sein. Sie sollen besonders breit anwendbar sein. Insbesondere sollen sie sich als flüssige und feste Dual-Cure-Beschichtungsstoffe, vor allem Dual-Cure-Elektrotauchlacke, -Primer, -Füller, -Grundierfüller, -Unidecklacke, - Basislacke und -Klarlacke, speziell Dual-Cure-Klarlacke, oder zu deren Herstellung eignen.

Die Dual-Cure-härtbaren Materialien sollen neue, thermisch und mit aktinischer Strahlung gehärtete, duroplastische Materialien, insbesondere Beschichtungen, vor allem Elektrotauchlackierungen, Primerlackierungen, Füllerlackierungen und Grundierungen, Unidecklackierungen, Basislackierungen und Klarlackierungen, speziell Klarlackierungen, mit vorzüglichen anwendungstechnischen Eigenschaften liefern. Insbesondere sollen die duroplastischen Materialien, insbesondere die Beschichtungen, keine Störungen, wie Verfärbungen oder Stippen, aufweisen, sodass sie auch für besonders technisch und ästhetisch besonders anspruchsvolle Verwendungszwecke wie die Automobilserienlackierung (OEM) und Autoreparaturlackierung, inklusive der Reparatur in der Linie, in Betracht kommen.

Speziell die neuen Klarlackierungen sollen die so genannte Automobilqualität aufweisen, wie sie in dem europäischen Patent EP 0 352 298 B1, Seite 15, Zeilen 42, bis Seite 17, Zeile 40, definiert ist.

### Lösung

Demgemäß wurden die lateralen, primäre und/oder sekundäre Carbamatgruppen und mit aktinischer Strahlung aktivierbare Gruppen enthaltenden Copolymerisate (A) gefunden, herstellbar, indem man
I. in einem ersten Verfahrensschritt
   (a1) mindestens ein Monomer, enthaltend
      (a11) mindestens eine Gruppe der allgemeinen Formel I:

         CH₂=C(R)C(O)-O- (I),

         worin die Variable R für ein Wasserstoffatom, ein Halogenatom, eine Nitrilgruppe oder eine Alkylgruppe mit 1 bis 10 Kohlenstoffatomen steht, und
      (a12) mindestens eine primäre und/oder sekundäre Carbamatgruppe,
         und
   (a2) mindestens ein Monomer, enthaltend
      (a21) mindestens eine radikalisch oder ionisch polymerisierbare, olefinisch ungesättigte Doppelbindung und
      (a22) mindestens eine mit den Carbamatgruppen (a12) nicht reagierende und mit der Doppelbindung (a21) nicht polymerisierbare, reaktive, funktionelle Gruppe,
   copolymerisiert, wodurch das Copolymerisat (a1/a2) resultiert, und
II. in einem weiteren Verfahrensschritt das Copolymerisat (a1/a2) mit
   (a3) mindestens einer Verbindung, enthaltend
      (a31) mindestens eine mit aktinischer Strahlung aktivierbare Gruppe und
      (a32) mindestens eine zur reaktiven, funktionellen Gruppe (a22) komplementären, reaktiven, funktionellen Gruppe
umsetzt, wodurch das Copolymerisat (A) resultiert.

Im Folgenden werden die lateralen, primäre und/oder sekundäre Carbamatgruppen und mit aktinischer Strahlung aktivierbare Gruppen enthaltenden Copolymerisate (A) als »erfindungsgemäße Copolymerisate (A)« bezeichnet.

Außerdem wurde das Verfahren zur Herstellung von laterale, primäre und/oder sekundäre Carbamatgruppen (a12) und mit aktinischer Strahlung aktivierbare Gruppen (a31) enthaltenden Copolymerisaten (A) gefunden, bei dem man
I. in einem ersten Verfahrensschritt
   (a1) mindestens ein Monomer, enthaltend
      (a11) mindestens eine Gruppe der allgemeinen Formel I:

         CH₂=C(R)C(O)-O- (I),

         worin die Variable R für ein Wasserstoffatom, ein Halogenatom, eine Nitrilgruppe oder eine Alkylgruppe mit 1 bis 10 Kohlenstoffatomen steht, und
      (a12) mindestens eine primäre und/oder sekundäre Carbamatgruppe,
         und
   (a2) mindestens ein Monomer, enthaltend
      (a21) mindestens eine radikalisch oder ionisch polymerisierbare, olefinisch ungesättigte Doppelbindung und
      (a22) mindestens eine mit den Carbamatgruppen (a12) nicht reagierende und mit der Doppelbindung (a21) nicht polymerisierbare, reaktive, funktionelle Gruppe,
      copolymerisiert, wodurch das Copolymerisat (a1/a2) resultiert, und
II. in einem weiteren Verfahrensschritt das Copolymerisat (a1/a2) mit
   (a3) mindestens einer Verbindung, enthaltend
      (a31) mindestens eine mit aktinischer Strahlung aktivierbare Gruppe und
      (a32) mindestens eine zur reaktiven funktionellen Gruppe (a22) komplementären, reaktiven, funktionellen Gruppe
umsetzt, wodurch das Copolymerisat (A) resultiert.

Im Folgenden wird das Verfahren zur Herstellung von laterale, primäre und/oder sekundäre Carbamatgruppen und mit aktinischer Strahlung aktivierbare Gruppen enthaltenden Copolymerisaten (A) als »erfindungsgemäßes Verfahren« bezeichnet.

Nicht zuletzt wurde die Verwendung der erfindungsgemäßen Copolymerisate (A) und der nach dem erfindungsgemäßen Verfahren hergestellten Copolymerisate (A) als thermisch und mit aktinischer Strahlung härtbare Materialien oder zu deren Herstellung gefunden, was im Folgenden als »erfindungsgemäße Verwendung« bezeichnet wird.

Weitere Erfindungsgegenstände gehen aus der Beschreibung hervor.

### Vorteile der Erfindung

Im Hinblick auf den Stand der Technik war es überraschend und für den Fachmann nicht vorhersehbar, dass die Aufgabe, die der vorliegenden Erfindung zugrunde lag, mit Hilfe der erfindungsgemäßen Copolymerisate (A), des erfindungsgemäßen Verfahrens und der erfindungsgemäßen Verwendung gelöst werden konnte.

Überraschenderweise wiesen die erfindungsgemäßen Copolymerisate (A), die Nachteile des Standes der Technik nicht mehr länger auf.

Sie ließen sich in besonders einfacher und sehr gut reproduzierbarer Weise nach dem erfindungsgemäßen Verfahren in weniger Verfahrensschritten herstellen als die üblichen und bekannten Copolymerisate. Sie enthielten keine Nebenprodukte oder nur sehr geringe, d. h. technisch nicht relevante, Mengen, an Nebenprodukten. Dabei konnte ihr anwendungstechnisches Eigenschaftsprofil in einfacher Weise gezielt eingestellt und variiert und optimiert werden.

Die erfindungsgemäßen Copolymerisate (A) waren besonders breit anwendbar. Insbesondere eigneten sie sich im Rahmen der erfindungsgemäßen Verwendung in besonderem Maße als thermisch und mit aktinischer Strahlung härtbare (Dual-Cure-härtbare) Materialien oder zu deren Herstellung.

Die erfindungsgemäßen Dual-Cure-härtbaren Materialien wiesen keine oder nur sehr geringe, d. h. technisch nicht relevante, Verfärbungen und Stippen auf. Sie waren sehr gut verarbeitbar und applizierbar. Sie waren besonders breit anwendbar. Insbesondere eigneten sie sich als flüssige und feste Dual-Cure-Beschichtungsstoffe, vor allem als Dual-Cure-Elektrotauchlacke, -Primer, -Füller, -Grundierfüller, -Unidecklacke, - Basislacke und -Klarlacke, speziell Dual-Cure-Klarlacke, oder zu deren Herstellung.

Die erfindungsgemäßen Dual-Cure-härtbaren Materialien lieferten thermisch und mit aktinischer Strahlung gehärtete, duroplastische Materialien, insbesondere Beschichtungen, vor allem Elektrotauchlackierungen, Primerlackierungen, Füllerlackierungen und Grundierungen, Unidecklackierungen, Basislackierungen und Klarlackierungen, speziell Klarlackierungen, mit vorzüglichen anwendungstechnischen Eigenschaften. Insbesondere wiesen die erfindungsgemäßen duroplastischen Materialien, insbesondere die erfindungsgemäßen Beschichtungen, keine Störungen, wie Verfärbungen oder Stippen, auf, sodass sie auch für technisch und ästhetisch besonders anspruchsvolle Verwendungszwecke wie die Automobilserienlackierung (OEM) und Autoreparaturlackierung, inklusive der Reparatur in der Linie, in Betracht kamen.

Speziell die erfindungsgemäßen Klarlackierungen zeigten die so genannte Automobilqualität, wie sie in dem europäischen Patent EP 0 352 298 B1, Seite 15, Zeilen 42, bis Seite 17, Zeile 40, definiert ist.

### Ausführliche Beschreibung der Erfindung

Die erfindungsgemäßen Copolymerisate (A) enthalten laterale, d. h. seitenständige, primäre und/oder sekundäre, vorzugsweise primäre, Carbamatgruppen (a12). Vorzugsweise enthalten sie im statistischen Mittel mehr als zwei, bevorzugt mehr als drei und insbesondere mehr als vier Carbamatgruppen (a12) im Molekül.

Außerdem können sie mindestens eine terminale, d. h. endständige, primäre und/oder sekundäre, vorzugsweise primäre, Carbamatgruppe (a12) enthalten.

Vorzugsweise enthalten die erfindungsgemäßen Copolymerisate (A) überwiegend laterale Carbamatgruppen (a12), d. h., es ist mindestens eine laterale Carbamatgruppe (a12) mehr vorhanden, als an terminalen Carbamatgruppen (a12) vorliegt.

Die Stickstoffatome der sekundären Carbamatgruppen (a12) sind mit einem einbindigen, organischen Rest (a121) substituiert. Als Reste (a121) kommen alle einbindigen, organischen Reste in Betracht, die unter den üblichen und bekannten Bedingungen der thermisch und/oder mit aktinischer Strahlung initiieren Copolymerisation und den Reaktionen der Carbamatgruppen (a121) mit komplementären, reaktiven, funktionellen Gruppen inert sind, d. h., dass sie keine Nebenreaktionen eingehen und/oder die gewünschten Reaktionen nicht inhibieren.

Vorzugsweise werden die einbindigen, organischen Reste (a121), aus der Gruppe, bestehend aus
- mit mindestens einem Rest (a1211) substituierten und unsubstituierten,
- mindestens ein mindestens zweibindiges, insbesondere zweibindiges, Heteroatom (a1212) enthaltenden und von Heteroatomen freien,
- mindestens eine mindestens zweibindige, insbesondere zweibindige, verknüpfende, funktionelle Gruppe (a1213) enthaltenden und von solchen Gruppen freien

Alkylaryl-, Arylalkyl-, Alkylcycloalkyl-, Cycloalkylalkyl-, Arylcycloalkyl-, Cycloalkylaryl-, Alkylcycloalkylaryl-, Alkylarylcycloalkyl-, Arylcycloalkylalkyl-; Arylalkylcycloalkyl-, Cycloalkylalkylaryl- und Cycloalkylarylalkyl-Resten, wobei der Strich jeweils die kovalente Bindung zwischen einem Kohlenstoffatom eines Rests und dem Stickstoffatom der Carbamatgruppe symbolisiert, ausgewählt.

Als Reste (a1211) kommen alle üblichen und bekannten Elektronen ziehenden und Elektronen schiebenden Atome und einbindigen, organischen Reste in Betracht, die im vorstehend aufgeführten Sinne inert sind. Beispiele geeigneter Reste (a1211) sind Halogenatome, wie Fluor, Chlor, Brom oder Jod, oder Nitrilgruppen oder Nitrogruppen.

Als zweibindige Heteroatome (a1212) kommen insbesondere Sauerstoffatome und Schwefelatome in Betracht, die beispielsweise in Ethergruppen und/oder Thioethergruppen enthaltenden Resten (a121) vorhanden sind.

Als mindestens zweibindige, insbesondere zweibindige, verknüpfende, funktionelle Gruppe (a1213) kommen alle in der organischen Chemie üblichen und bekannten funktionellen Gruppen in Betracht, die im vorstehend genannten Sinne inert sind, wie beispielsweise Carbonsäureester-, Thiocarbonsäureester-, Carbonat-, Thiocarbonat-, Phosphorsäureester-, Thiophosphorsäureester-, Phosphonsäureester-, Thiophosphonsäureester-, Phosphit-, Thiophosphit-, Sulfonsäureester-, Amid-, Amin-, Thioamid-, Phosphorsäureamid-, Thiophosphorsäureamid-, Phosphonsäureamid-, Thiophosphonsäureamid-, Sulfonsäureamid-, Imid-, Urethan-, Hydrazid-, Harnstoff-, Thioharnstoff-, Carbonyl-, Thiocarbonyl-, Sulfon-, Sulfoxid- oder Siloxangruppen.

Vorzugsweise sind die einbindigen, organischen Reste (a121) unsubstituiert. Bevorzugt sind sie von Heteroatomen (a1212) frei. Besonders bevorzugt enthalten sie keine verknüpfenden, funktionellen Gruppen (a1213). Ganz besonders bevorzugt sind sie unsubstituiert und von Heteroatomen (a1212) und funktionellen Gruppen (a1213) frei.

Insbesondere werden die Reste (a121) aus der Gruppe, bestehend aus Methyl, Ethyl, Propyl, Isopropyl, n-Butyl, Isobutyl, tert.-Butyl, n-Pentyl, Amyl, Hexyl, Cyclopentyl, Cyclohexyl und Phenyl, ausgewählt.

Die erfindungsgemäßen Copolymerisate (A) enthalten laterale, mit aktinischer Strahlung, insbesondere mit UV-Strahlung und/oder Elektronenstrahlung, aktivierbare Gruppen (a31). Vorzugsweise enthalten sie im statistischen Mittel mindestens zwei, bevorzugt mindestens drei und insbesondere mindestens vier laterale, mit aktinischer Strahlung aktivierbare Gruppen (a31).

Darüber hinaus können sie mindestens eine endständige, mit aktinischer Strahlung aktivierbare Gruppe (a31) enthalten.

"Mit aktinischer Strahlung aktivierbar" bedeutet im Rahmen der vorliegenden Erfindung dass eine Gruppe (a31) mindestens eine, insbesondere eine, Bindung (a311) enthält, die durch Energiezufuhr mittels aktinischer Strahlung in die Lage versetzt wird, chemische Reaktionen, wie die üblichen und bekannten Photoreaktionen, Cyclisierungen, Insertionsreaktionen oder radikalischen oder ionischen Polymerisationen, einzugehen.

Vorzugsweise werden die mit aktinischer Strahlung aktivierbaren Bindungen (a311) aus der Gruppe, bestehend aus Kohlenstoff-Wasserstoff-Einzelbindungen, Kohlenstoff-Kohlenstoff-, Kohlenstoff-Sauerstoff-, Kohlenstoff-Stickstoff-, Kohlenstoff-Phosphor- und Kohlenstoff-Silizium-Einzelbindungen und -Doppelbindungen sowie in Kohlenstoff-Kohlenstoff-Dreifachbindungen, ausgewählt. Insbesondere werden Kohlenstoff-Kohlenstoff-Doppelbindungen verwendet.

Die mit aktinischer Strahlung aktivierbaren Bindungen (a311) können in den unterschiedlichsten, üblichen und bekannten, organischen Gruppen (a31) vorliegen. Vorzugsweise werden die mit aktinischer Strahlung aktivierbaren Gruppen (a31) aus der Gruppe, bestehend aus (Meth)Acrylat-, Ethacrylat-, Crotonat-, Cinnamat-, Vinylether-, Vinylester-, Ethenylarylen-, Dicyclopentadienyl-, Norbornenyl-, Isoprenyl-, Isopropenyl-, Allyl- und Butenylgruppen; Ethenylarylen-, Dicyclopentadienyl-, Norbornenyl-, Isoprenyl-, Isopropenyl-, Allyl- und Butenylethergruppen sowie Ethenylarylen-, Dicyclopentadienyl-, Norbornenyl-, Isoprenyl-, Isopropenyl-, Allyl- und Butenylestergruppen, bevorzugt (Meth)Acrylatgruppen, insbesondere Acrylatgruppen, ausgewählt.

Außer den vorstehend genannten Gruppen (a12) und (a31) können die erfindungsgemäßen Copolymerisate (A) noch mindestens eine von den Gruppen (a12) und (a31) verschiedene, funktionelle Gruppe (a41) enthalten, die durch
1. die Copolymerisation eines von den Monomeren (a1) und (a2) verschiedenen Monomeren (a4), enthaltend
   1.1 mindestens eine der nachstehend beschriebenen, radikalisch oder ionisch polymerisierbaren, olefinisch ungesättigten Doppelbindungen (a21) oder mindestens eine der nachstehend beschriebenen Gruppen (a11) der allgemeinen Formel I und
   1.2 mindestens eine mit den Doppelbindungen (a21) und den Gruppen (a11) nicht polymerisierbaren, funktionellen Gruppe (a41), die unter den Bedingungen
      - der Herstellung der nachstehend beschriebenen Copolymerisate (a1/a2) und
      - ihrer Umsetzung mit den nachstehend beschriebenen Verbindungen (a3) mit den vorstehend beschriebenen Carbamatgruppe (a12) und den nachstehend beschriebenen reaktiven funktionellen Gruppen (a22) und (a32)
      nicht oder nur sehr langsam reagieren; und/oder
2. die Umsetzung der nachstehend beschriebenen Copolymerisate (a1/a2) mit mindestens einer Verbindung (a6), enthaltend
   2.1 mindestens eine der vorstehend beschriebenen, funktionelle Gruppe (a41) und
   2.2 mindestens eine zu den nachstehend beschriebenen, reaktiven, funktionellen Gruppen (a22) komplementären, reaktiven funktionellen Gruppe (a32) enthält;

in die erfindungsgemäßen Copolymerisate (A) eingeführt werden können.

Der Fachmann kann die Monomeren (a4) und die Verbindungen (a6) aufgrund seines allgemeinen Fachwissens anhand der ihm bekannten Reaktivität der Gruppen (a12), (a22) und (a32) einerseits und der Gruppen (a41) andererseits leicht auswählen.

Sofern vorhanden, enthalten die erfindungsgemäßen Copolymerisate (A) die Gruppen (a41) vorzugsweise nur in untergeordneten Mengen, d. h. in Mengen, die das erfindungswesentliche Eigenschaftsprofil, das durch die obligatorisch vorhandenen Carbamatgruppen (a12) und mit aktinischer Strahlung aktivierbaren Gruppen (a11) geprägt ist, zwar variiert, indes nicht so weit verändert, dass es in der Hauptsache durch die Gruppen (a41) bestimmt wird. Bevorzugt ist dann das Äquivalentverhältnis [(a11)+(a31)]: (a41) > 2, besonders bevorzugt > 5 und insbesondere > 10.

Das zahlenmittlere Molekulargewicht Mn, das massenmittlere Molekulargewicht Mw und die Uneinheitlichkeit U der erfindungsgemäßen Copolymerisate (A) können sehr breit variieren und richten sich nach den Erfordernissen des jeweiligen Anwendungsgebiets. Erfordert beispielsweise eine bestimmte Anwendung feste, thermoplastisch verarbeitbare, erfindungsgemäße Copolymerisate (A), weisen diese vergleichsweise hohe Molekulargewichte Mn und Mw auf. Erfordert dagegen eine bestimmte Anwendung bei vergleichsweise niedrigen Temperaturen, insbesondere Raumtemperatur, flüssige, erfindungsgemäße Copolymerisate (A), weisen diese vergleichsweise niedrige Molekulargewichte Mn und Mw auf.

Vorzugsweise haben die erfindungsgemäßen Copolymerisate (A) ein zahlenmittleres Molekulargewicht Mn von 500 bis 250.000 Dalton, bevorzugt 1.000 bis 200.000 Dalton, besonders bevorzugt 1.500 bis 150.000 Dalton, ganz besonders bevorzugt 1.500 bis 100.000 Dalton und insbesondere 1.500 bis 50.000 Dalton.

Vorzugsweise haben die erfindungsgemäßen Copolymerisate (A) ein massenmittleres Molekulargewicht Mw von 1.000 bis 500.000 Dalton, bevorzugt 2.000 bis 400.000 Dalton, besonders bevorzugt 2.500 bis 300.000 Dalton, ganz besonders bevorzugt 2.500 bis 200.000 Dalton und insbesondere 2.500 bis 100.000 Dalton.

Vorzugsweise ist die Uneinheitlichkeit U des Molekulargewichts klein. Bevorzugt ist U < 15, besonders bevorzugt < 10, ganz besonders bevorzugt < 8 und insbesondere < 5.

An für sich können die erfindungsgemäßen Copolymerisate (A) nach den unterschiedlichsten Verfahren hergestellt werden. Vorzugsweise werden die erfindungsgemäßen Copolymerisate (A) aber mit Hilfe des erfindungsgemäßen Verfahrens hergestellt.

Bei dem erfindungsgemäßen Verfahren werden
I. in einem ersten Verfahrensschritt
   (a1) mindestens ein, insbesondere ein, Monomer, enthaltend
      (a11) mindestens eine, insbesondere eine, Gruppe der allgemeinen Formel I:

         CH₂=C(R)C(O)-O- (I),

         worin die Variable R für ein Wasserstoffatom, ein Halogenatom, eine Nitrilgruppe oder eine Alkylgruppe mit 1 bis 10 Kohlenstoffatomen steht, und
      (a12) mindestens eine, insbesondere eine, der vorstehend beschriebenen, primären und/oder sekundären, insbesondere primären, Carbamatgruppen,
         und
   (a2) mindestens ein Monomer, insbesondere mindestens zwei Monomere, enthaltend
      (a21) mindestens eine, insbesondere eine, radikalisch oder ionisch polymerisierbare, olefinisch ungesättigte Doppelbindung und
      (a22) mindestens eine, insbesondere eine, mit den Carbamatgruppen (a12) nicht reagierende und mit der Doppelbindung (a21) nicht polymerisierbare, reaktive, funktionelle Gruppe,
      copolymerisiert, wodurch das Copolymerisat (a1/a2) resultiert, und
II. in einem weiteren Verfahrensschritt das Copolymerisat (a1/a2) mit
   (a3) mindestens einer, insbesondere einer, Verbindung, enthaltend
      (a31) mindestens eine, insbesondere eine, mit aktinischer Strahlung, insbesondere UV-Strahlung und/oder Elektronenstrahlung, aktivierbare Gruppe und
      (a32) mindestens eine, insbesondere eine, zur reaktiven, funktionellen Gruppe (a22) komplementären, reaktiven, funktionellen Gruppe
   umsetzt, wodurch das Copolymerisat (A) resultiert.

Das erfindungsgemäß zu verwendende Monomer (a1) enthält die Gruppe (a11) der allgemeinen Formel I.

In der allgemeinen Formel I steht der Rest R vorzugsweise für ein Wasserstoffatom, Chloratom, Bromatom, lodatom, eine Nitrilgruppe oder eine Alkylgruppe mit 1 bis 6 Kohlenstoffatomen. Insbesondere steht der Rest R für ein Wasserstoffatom oder eine Methylgruppe.

In den erfindungsgemäß bevorzugt eingesetzten Monomeren (a1) sind die Gruppen (a11) der allgemeinen Form I und die Carbamatgruppen (a12) vorzugsweise über eine zweibindige, verknüpfende, in dem vorstehend genannten Sinne inerte Gruppe (a13) verbunden.

Vorzugsweise werden die Gruppen (a13) aus der Gruppe, bestehend aus
- mit mindestens einem Rest (a131) substituierten und unsubstituierten,
- mindestens ein mindestens zweibindiges, insbesondere zweibindiges, Heteroatom (a132) enthaltenden und von Heteroatomen freien,
- mindestens eine mindestens zweibindige, insbesondere zweibindige, verknüpfende, funktionelle Gruppe (a133) enthaltenden und von solchen Gruppen freien
aliphatischen, cycloaliphatischen, aromatischen, aliphatisch-cycloaliphatischen, aliphatisch-aromatischen, cycloaliphatisch-aromatischen und aliphatisch-cycloaliphatischen-aromatischen Gruppen, ausgewählt.

Beispiele geeigneter Reste (a131) sind die vorstehend beschriebenen Reste (a1211).

Beispiele geeigneter Heteroatome (a132) sind die vorstehend beschriebenen Heteroatome (a1212).

Beispiele geeigneter verknüpfender, funktioneller Gruppen (a133) sind die vorstehend beschriebenen Gruppen (a1213).

Beispiele geeigneter Gruppen (a13) sind aus der internationalen Patentanmeldung WO 03/016411, Seite 8, Zeile 22, bis Seite 10, Zeile 18, bekannt.

Die Monomeren (a1) sind übliche und bekannte, zum Teil im Handel erhältliche Produkte.

Beispiele geeigneter Monomere (a1) und Verfahren zu ihrer Herstellung sind aus den amerikanischen Patenten
- US 3,479,328, Spalte 1, Zeile 11, bis Spalte 5, Zeile 30, Spalte 7, Zeilen 19 bis 53, und Spalte 8, Zeile 61, bis Spalte 9, Zeile 6, und
- US 3,674,838, Spalte 1, Zeile 9, bis Spalte 4, Zeile 75, und Spalte 5, Zeile 20, bis Spalte 6, Zeile 21,
bekannt. Das Monomer (a1) Butyl-N-urethan-O-ethylacrylat wird unter der Marke Ebecryl® CL 1039 von der Firma UCB vertrieben.

Das Monomer (a2) enthält die radikalisch oder ionisch, d. h. kationisch oder anionisch, polymerisierbare, olefinisch ungesättigte Doppelbindung (a21).

Beispiele geeigneter olefinisch ungesättigter Doppelbindungen (a21) sind die vorstehend beschriebenen, mit aktinischer Strahlung aktivierbaren Kohlenstoff-KohlenstoffDoppelbindungen (a311), die vorzugsweise in den vorstehend beschriebenen, mit aktinischer Strahlung aktivierbaren Gruppen (a31) vorliegen. Insbesondere liegen die olefinisch ungesättigten Doppelbindungen (a21) in den (Meth)Acryloylgruppen und/oder den Ethenylarylengruppen vor. Beispiele geeigneter Ethenylarylengruppen sind aus der deutschen Patentanmeldung
- DE 199 48 004 A1,Seite 10, Zeilen 6 bis 13, i. V. m. Seite 8, Zeile 23, bis Seite 9, 31,
bekannt. Insbesondere werden (Meth)Acryloylgruppen eingesetzt.

Das Monomer (a2) enthält die mit den Carbamatgruppen (a12) nicht reagierende und mit der Doppelbindung (a21) nicht polymerisierbare, reaktive, funktionelle Gruppe (a22). "Nicht reagierend" bedeutet, dass die Gruppen (a22) unter den Bedingungen der radikalischen oder ionischen Polymerisation und unter den Bedingungen der Lagerung, der Handhabung der resultierenden Copolymerisate (a1/a2) nicht oder nur sehr langsam mit den Carbamatgruppen (a12) reagieren.

Im Grunde kommen alle reaktiven funktionellen Gruppen der organischen Chemie, die das vorstehende Eigenschaftsprofil aufweisen, als Gruppen (a22) in Betracht. Vorzugsweise werden die Gruppen (a22) aus der Gruppe, bestehend aus Hydroxylgruppen, Thiolgruppen, primären und sekundären Aminogruppen, Säuregruppen, insbesondere Sulfonsäure-, Phosphonsäure-, saure Sulfatester-, saure Phosphatester- und Carboxylgruppen, Epoxidgruppen, Carbonamidgruppen, Carbonylhalogenidgruppen, insbesondere Carbonylchloridgruppen, Carbonylgruppen in Aldehyd- oder Ketonfunktion sowie Isocyanatgruppen, ausgewählt. Insbesondere werden Carboxylgruppen oder Epoxidgruppen (a22) eingesetzt.

In den Monomeren (a2) können die olefinisch ungesättigten Doppelbindungen (a21) oder die Gruppen, die die olefinisch ungesättigten Doppelbindungen (a21) enthalten, einerseits und die reaktiven funktionellen Gruppen (a22) andererseits direkt miteinander oder über eine der vorstehend beschriebenen, insbesondere zweibindigen, inerten, verknüpfenden, funktionellen Gruppen (a13) verknüpft sein.

Beispiele geeigneter Monomere (a2) sind aus den Patentanmeldungen
- DE 199 48 004 A1, Seite 8, Zeile 23, bis Seite 9, Zeile 40, Seite 11, Zeilen 33 bis 48, Seite 11, Zeile 65, bis Seite 12, Zeile 6, und Seite 12, Zeilen 22 bis 30,
- WO 03/016411, Seite 22, Zeile 25, bis Seite 23, Zeile 21, oder
- EP 0 650 979 A1, Spalte 5, Zeilen sind 10 bis 39, und Spalte 6, Zeilen 35 bis 48, bekannt.

Im Verfahrensschritt I werden die Monomeren (a1) und (a2) copolymerisiert, wodurch die Copolymerisate (a1/a2) resultieren.

Vorzugsweise wird noch mindestens ein weiteres, mit den Monomeren (a1) und (a2) radikalisch oder ionisch, vorzugsweise radikalisch, copolymerisierbares Monomer (a4) copolymerisiert, um das chemische Eigenschaftsprofil der Copolymerisate (a1/a2) und der erfindungsgemäßen Copolymerisate (A) in vorteilhafter Weise durch die vorstehend beschriebenen, funktionellen Gruppen (a41) zu variieren.

Bevorzugt wird noch mindestens ein weiteres, mit den Monomeren (a1) und (a2) radikalisch oder ionisch, vorzugsweise radikalisch, copolymerisierbares Monomer (a5) copolymerisiert, das mindestens eine der vorstehend beschriebenen, olefinisch ungesättigten Doppelbindungen (a21) enthält und von reaktiven, funktionellen Gruppen (a12), (a22), (a32) und (a41) frei ist. Insbesondere werden noch mindestens zwei dieser Monomeren (a5) copolymerisiert. Hierdurch kann das physikalische Eigenschaftsprofil, insbesondere die Glasübergangstemperatur, der erfindungsgemäßen Copolymerisate (A) in vorteilhafter Weise variiert werden.

Beispiele geeigneter Monomere (a4) und (a5) sind aus der internationalen Patentanmeldung
- WO 03/016411, Seite 24, Zeile 9, bis Seite 28, Zeile 8,
bekannt.

Die Herstellung der Copolymerisate (a1/a2) im Verfahrensschritt I des erfindungsgemäßen Verfahrens weist keine methodischen Besonderheiten auf, sondern kann, wie in den Patentanmeldungen
- WO 03/016411, Seite 29, Zeile 3, bis Seite 30, Zeile 15, oder
- DE 198 50 210 A1, Seite 4, Zeile 48, bis Seite 5, Zeile 35,
beschrieben, durchgeführt werden.

Im Verfahrensschritt II des erfindungsgemäßen Verfahrens werden die Copolymerisate (a1/a2) mit der Verbindung (a3) umgesetzt.

Beispiele geeigneter, mit aktinischer Strahlung aktivierbarer Gruppen (a31) für die Verbindungen (a3) sind die vorstehend beschriebenen, mit aktinischer Strahlung aktivierbaren Gruppen, die mit aktinischer Strahlung aktivierbare Bindungen (a311) enthalten.

Beispiele geeigneter, zur reaktiven, funktionellen Gruppe (a22) komplementären, reaktiven, funktionellen Gruppe (a32) sind aus den Patentanmeldungen
- WO 03/016411, Seite 26, Zeile 1, bis Seite 22, Zeile 18, oder
- EP 0 650 979 A1, Spalte 5, Zeilen sind 10 bis 39, und Spalte 6, Zeilen 35 bis 48,
bekannt. Vorzugsweise werden die komplementären, reaktiven, funktionellen Gruppen (a32) aus der Gruppe, bestehend aus Hydroxylgruppen, Thiolgruppen, primären und sekundären Aminogruppen, N-Hydroxyalkylaminogruppen, N-Alkoxyalkylaminogruppen, Säuregruppen, Epoxidgruppen und Isocyanatgruppen, ausgewählt.

Bevorzugt werden als Paare komplementärer, reaktiver, funktioneller Gruppen (a22)/(a32)
- Hydroxylgruppen Thiolgruppen oder primäre und sekundäre Aminogruppen einerseits und Isocyanatgruppen andererseits oder
- Aminogruppen oder Carboxylgruppen einerseits und Epoxidgruppen andererseits
verwendet. Insbesondere werden Carboxylgruppen einerseits und Epoxidgruppen andererseits eingesetzt.

In den Verbindungen (a3) können die mit aktinischer Strahlung aktivierbaren Gruppen (a31) und die reaktiven funktionellen Gruppen (a32) direkt miteinander oder über eine der vorstehend beschriebenen, zweibindigen, inerten, verknüpfenden, funktionellen Gruppen (a13) verknüpft sein. Demgemäß können die vorstehend beschriebenen Monomere (a2) als Verbindungen (a3) verwendet werden. Ergänzend wird auf die europäischen Patentanmeldung EP 0 650 979 A1, Spalte 6, Zeilen 25 bis 48, verwiesen.

Insbesondere wird im Falle der Verwendung von (Meth)Acrylsäure als Monomer (a2) Glycidyl(meth)acrylat als Verbindung (a3) und umgekehrt im Falle der Verwendung von Glycidyl(meth)acrylat als Monomer (a2) (Meth)Acrylsäure als Verbindung (a3) verwendet.

Im Verfahrensschritt II können die Copolymerisate (a1/a2) außer mit den Verbindungen (a3) noch mit den vorstehend beschriebenen Verbindungen (a6) umgesetzt werden, um die vorstehend beschriebenen, in der beschriebenen Weise ausgewählten, funktionellen Gruppen (a41) in die erfindungsgemäßen Copolymerisate (A) einzuführen.

Methodisch gesehen weist die polymeranaloge Umsetzung der Copolymerisate (a1/a2) mit den Verbindungen (a3) sowie gegebenenfalls den Verbindungen (a5) im Verfahrensschritt II des erfindungsgemäßen Verfahrens keine Besonderheiten auf, sondern erfolgt vorzugsweise durch Vermischen der vorstehend beschriebenen Ausgangsverbindungen in geeigneten Mischaggregaten, wie Rührkessel, Rührwerksmühlen, Extruder, Kneter, Ultraturrax, In-line-Dissolver, statische Mischer, Mikromischer, Zahnkranzdispergatoren, Druckentspannungsdüsen und/oder Microfluidizer. Vorzugsweise wird hierbei unter Ausschluss von Licht einer Wellenlänger λ < 550 nm oder unter völligem Ausschluss von Licht gearbeitet, um eine vorzeitige Vernetzung der erfindungsgemäßen Copolymerisate (A) zu verhindern.

Vorzugsweise erfolgt die polymeranaloge Umsetzung des Verfahrensschritts II bei Temperaturen von 0 bis 200°C, bevorzugt 20 bis 150°C und insbesondere 30 bis 120°C. Bevorzugt werden dabei übliche und bekannte Katalysatoren für die Umsetzung der komplementären, reaktiven, funktionellen Gruppen (a22) und (a32) verwendet. Beispiele geeigneter Katalysatoren werden in der europäischen Patentanmeldung EP 0 650 979 A1, Spalte 6, Zeile 56, bis Spalte 7, Zeile 7, beschrieben. Besonders bevorzugt wird die polymeranaloge Umsetzung in der Gegenwart von üblichen und bekannten Inhibitoren der thermischen Vernetzung und der radikalischen Polymerisation durchgeführt. Beispiele geeigneter Inhibitoren sind aus der europäischen Patentanmeldung EP 0 650 979 A1, Spalte 6, Zeilen 20 bis 27, bekannt. Ganz besonders bevorzugt wird bei der polymeranalogen Umsetzung ein Äquivalentverhältnis (a22) : (a32) von 0,5 bis 1,5, bevorzugt 0,7 bis 1,3 besonders bevorzugt 0,8 bis 1,2 und insbesondere 0,9 bis 1,1 angewandt.

Die resultierenden erfindungsgemäßen Copolymerisate (A), insbesondere die erfindungsgemäßen (Meth)Acrylatcopolymerisate (A) sind besonders breit anwendbar. Beispielsweise können sie als thermoplastische Materialien verwendet werden. Insbesondere eignen sie sich in besonderem Maße als thermisch und mit aktinischer Strahlung (Dual-Cure-)härtbare Materialien oder zu deren Herstellung, wobei sie vorzugsweise die Funktion von Bindemitteln (vgl. Römpp Lexikon Lacke und Druckfarben, Georg Thieme Verlag, Stuttgart, New York, 1998, »Bindemittel«) übernehmen.

Die erfindungsgemäßen Dual-Cure-härtbaren Materialien weisen keine oder nur sehr geringe, d. h. technisch nicht relevante, Verfärbungen und Stippen auf. Sie sind sehr gut verarbeitbar und applizierbar. Sie sind besonders breit anwendbar. Insbesondere eignen sie sich als neue, flüssige und feste Dual-Cure-Beschichtungsstoffe, vor allem Dual-Cure-Elektrotauchlacke, -Primer, -Füller, -Grundierfüller, -Unidecklacke, -Basislacke und - Klarlacke, speziell Dual-Cure-Klarlacke, oder zu deren Herstellung. Darüber hinaus kommen sie als neue Dual-Cure-Klebstoffe und -Dichtungsmassen zur Herstellung von neuen Klebschichten und Dichtungen in Betracht. Nicht zuletzt eignen sie sich zur Herstellung von neuen Formteilen und freitragenden Folien.

Die erfindungsgemäßen Dual-Cure-härtbaren Materialien können alle üblichen und bekannten Bestandteile von Dual-Cure-härtbaren Materialien enthalten, wie sie beispielsweise aus dem deutschen Patent
- DE 197 09 467 C 1, Seite 4, Zeile 30, bis Seite 6, Zeile 30,
   oder den Patentanmeldungen
- WO 03/016411, Seite 33, Zeile 6, bis Seite 35, Zeile 19,
- DE 199 48 004 A1, Seite 14, Zeile 4, bis Seite 17, Zeile 5, oder
- DE 100 48 849 A1, Seite 5, Absätze [0053] bis [0055],
bekannt sind. Durch diese Bestandteile kann ihr Eigenschaftsprofil in vorteilhafter Weise breit variiert werden. So können beispielsweise die erfindungsgemäßen Dual-Cure-härtbaren Materialien nach der Zugabe von üblichen und bekannten, thermisch aktivierbaren Initiatoren, wie Peroxide, Azoverbindungen und C-C-labile Verbindungen, TPP auch rein thermisch gehärtet werden.

Die Herstellung der erfindungsgemäßen Dual-Cure-härtbaren Materialien erfolgt vorzugsweise durch Vermischen der vorstehend beschriebenen Bestandteile in geeigneten Mischaggregaten wie Rührkessel, Rührwerksmühlen, Extruder, Kneter, Ultraturrax, In-line-Dissolver, statische Mischer, Mikromischer, Zahnkranzdispergatoren, Druckentspannungsdüsen und/oder Microfluidizer. Vorzugsweise wird hierbei unter Ausschluss von Licht einer Wellenlänge λ < 550 nm oder unter völligem Ausschluss von Licht gearbeitet, um eine vorzeitige Vernetzung der erfindungsgemäßen Massen zu verhindern.

Die erfindungsgemäßen Dual-Cure-härtbaren Materialien können in den unterschiedlichsten Aggregatzuständen vorliegen. So sind sie konventionelle, organische Lösemittel enthaltende Materialien, wässrige Materialien, im Wesentlichen oder völlig lösemittel- und wasserfreie flüssige Materialien (100%-Systeme), im Wesentlichen oder völlig lösemittel- und wasserfreie feste Pulver oder im wesentlichen oder völlig lösemittelfreie Pulversuspensionen (Pulverslurries). Außerdem können sie Einkomponentensysteme, in denen die Bindemittel und die Vernetzungsmittel nebeneinander vorliegen, oder Zwei- oder Mehrkomponentensysteme, in denen die Bindemittel und die Vernetzungsmittel bis kurz vor der Applikation getrennt voneinander vorliegen, sein.

Die erfindungsgemäßen Dual-Cure-härtbaren Materialien liefern thermisch und mit aktinischer Strahlung gehärtete, duroplastische Materialien, insbesondere Beschichtungen, vor allem Elektrotauchlackierungen, Primerlackierungen, Füllerlackierungen und Grundierungen, Unidecklackierungen, Basislackierungen und Klarlackierungen, speziell Klarlackierungen, sowie Klebschichten, Dichtungen, Formteile und freitragende Folien, mit vorzüglichen anwendungstechnischen Eigenschaften. Insbesondere weisen die duroplastischen Materialien, insbesondere die Beschichtungen, keine Störungen, wie Verfärbungen oder Stippen, auf, sodass die auch für technisch und ästhetisch besonders anspruchsvolle Verwendungszwecke wie die Automobilserienlackierung (OEM) und Autoreparaturlackierung, inklusive der Reparatur in der Linie, in Betracht kommen.

Zur Herstellung der erfindungsgemäßen duroplastisches Materialien werden die erfindungsgemäßen Dual-Cure-härtbaren Materialien auf übliche und bekannte temporäre oder permanente Substrate appliziert.

Vorzugsweise werden für die Herstellung der erfindungsgemäßen Folien und Formteile übliche und bekannte temporäre Substrate verwendet, wie Metall- und Kunststoffbänder oder Hohlkörper aus Metall, Glas, Kunststoff, Holz oder Keramik, die leicht entfernt werden können, ohne dass die erfindungsgemäßen Folien und Formteile beschädigt werden.

Werden die erfindungsgemäßen Dual-Cure-härtbaren Materialien für die Herstellung der erfindungsgemäßen Beschichtungen, Klebschichten und Dichtungen verwendet, werden permanente Substrate eingesetzt, wie Fortbewegungsmittel, insbesondere Flugzeuge, Schiffe, Schienenfahrzeuge, Kraftfahrzeuge und Teile hiervon; Bauwerke im Innen- und Außenbereich und Teile hiervon; Türen, Fenster und Möbel; Glashohlkörper; Coils; Container und Emballagen; industrielle Kleinteile; optische Bauteile, elektrotechnische Bauteile und mechanische Bauteile sowie Bauteile für weiße Ware. Die erfindungsgemäßen Folien und Formteile können ebenfalls als Substrate dienen.

Methodisch weist die Applikation der flüssigen erfindungsgemäßen Dual-Cure-härtbaren Materialien keine Besonderheiten auf, sondern kann durch alle üblichen und bekannten Applikationsmethoden, wie z.B. Spritzen, Sprühen, Rakeln, Streichen, Gießen, Tauchen, Träufeln oder Walzen erfolgen.

Auch die Applikation der pulverförmigen erfindungsgemäßen Dual-Cure-härtbaren Materialien weist keine methodischen Besonderheiten auf, sondern erfolgt beispielsweise nach den üblichen und bekannten Wirbelschichtverfahren, wie sie beispielsweise aus den Firmenschriften von BASF Coatings AG, »Pulverlacke für industrielle Anwendungen«, Januar 2000, oder »Coatings Partner, Pulverlack Spezial«, 1/2000, oder Römpp Lexikon Lacke und Druckfarben, Georg Thieme Verlag, Stuttgart, New York, 1998, Seiten 187 und 188, »Elektrostatisches Pulversprühen«, »Elektrostatisches Sprühen« und »Elektrostatisches Wirbelbadverfahren«, bekannt sind.

Bei der Applikation empfiehlt es sich, unter Ausschluss von aktinischer Strahlung zu arbeiten, um eine vorzeitige Vernetzung der erfindungsgemäßen Dual-Cure-härtbaren Materialien zu vermeiden.

Vorzugsweise werden die applizierten erfindungsgemäßen Dual-Cure-härtbaren Materialien mit UV-Strahlung gehärtet. Bevorzugt wird bei der Bestrahlung eine Strahlendosis von 100 bis 6.000, vorzugsweise 200 bis 3.000, bevorzugt 300 bis 2.000 und besonders bevorzugt 500 bis 1.800 mJcm⁻² eingesetzt, wobei der Bereich < 1.700 mJcm⁻² ganz besonders bevorzugt ist.

Dabei kann die Strahlenintensität breit variieren. Sie richtet sich insbesondere nach der Strahlendosis einerseits und der Bestrahlungsdauer andererseits. Die Bestrahlungsdauer richtet sich bei einer vorgegebenen Strahlendosis nach der Band- oder Vorschubgeschwindigkeit der Substrate in der Bestrahlungsanlage und umgekehrt.

Als Strahlenquellen für die UV-Strahlung können alle üblichen und bekannten UV-Lampen verwendet werden. Es kommen auch Blitzlampen in Betracht.

Vorzugsweise werden als UV-Lampen Quecksilberdampflampen, bevorzugt Quecksilbernieder-, -mittel- und -hochdruckdampflampen, insbesondere Quecksilbermitteldruckdampflampen, verwendet. Besonders bevorzugt werden unmodifizierte Quecksilberdampflampen plus geeignete Filter oder modifizierte, insbesondere dotierte, Quecksilberdampflampen verwendet.

Bevorzugt werden galliumdotierte und/oder eisendotierte, insbesondere eisendotierte, Quecksilberdampflampen verwendet, wie sie beispielsweise in R. Stephen Davidson, »Exploring the Science, Technology and Applications of U.V. and E.B. Curing«, Sita Technology Ltd., London, 1999, Chapter I, »An Overview«, Seite 16, Figure 10, oder Dipl.-Ing. Peter Klamann, »eltosch System-Kompetenz, UV-Technik, Leitfaden für Anwender«, Seite 2, Oktober 1998, beschrieben werden. Insbesondere wird dabei UV-Strahlung der in der deutschen Patentanmeldung DE 102 02 565 A1 beschriebenen spektralen Verteilung eingesetzt.

Beispiele geeigneter Blitzlampen sind Blitzlampen der Firma VISIT.

Der Abstand der UV-Strahlenquellen von den applizierten erfindungsgemäßen Dual-Cure-härtbaren Materialien kann überraschend breit variieren und daher sehr gut auf die Erfordernisse des Einzelfalls eingestellt werden. Vorzugsweise liegt der Abstand bei 2 bis 200, bevorzugt 2 bis 100, besonders bevorzugt 2 bis 50 und insbesondere 2 bis 30 cm. Deren Anordnung kann außerdem den Gegebenheiten des Substrats und der Verfahrensparameter angepasst werden. Bei kompliziert geformten Substraten, wie sie für Automobilkarosserien vorgesehen sind, können die nicht direkter Strahlung zugänglichen Bereiche (Schattenbereiche), wie Hohlräume, Falzen und andere konstruktionsbedingte Hinterschneidungen, mit Punkt-, Kleinflächen- oder Rundumstrahlern, verbunden mit einer automatischen Bewegungseinrichtung für das Bestrahlen von Hohlräumen oder Kanten, ausgehärtet werden.

Die Bestrahlung kann unter einer sauerstoffabgereicherten Atmosphäre durchgeführt werden. "Sauerstoffabgereichert" bedeutet, dass der Gehalt der Atmosphäre an Sauerstoff geringer ist als der Sauerstoffgehalt von Luft (20,95 Vol.-%). Die Atmosphäre kann im Grunde auch sauerstofffrei sein, d. h., es handelt sich um ein Inertgas. Wegen der fehlenden inhibierenden Wirkung von Sauerstoff kann dies aber eine starke Beschleunigung der Strahlenhärtung bewirken, wodurch Inhomogenitäten und Spannungen in den erfindungsgemäßen duroplastischen Materialien entstehen können. Es ist daher von Vorteil, den Sauerstoffgehalt der Atmosphäre nicht auf Null Vol.-% abzusenken.

Die thermische Härtung kann bei den erfindungsgemäßen Dual-Cure-härtbaren Materialien beispielsweise mit Hilfe eines gasförmigen, flüssigen und/oder festen, heißen Mediums, wie heiße Luft, erhitztes Öl oder erhitzte Walzen, oder mit Hilfe von Mikrowellenstrahlung, Infrarotlicht und/oder nahem Infrarotlicht (NIR) erfolgen. Vorzugsweise erfolgt das Erhitzen in einem Umluftofen oder durch Bestrahlen mit IR-und/oder NIR-Lampen. Wie bei der Härtung mit aktinischer Strahlung kann auch die thermische Härtung stufenweise erfolgen. Vorteilhafterweise erfolgt die thermische Härtung bei Temperaturen von Raumtemperatur bis 200°C.

Wird für die Härtung nahes Infrarot (NIR) verwendet, kann auch die Dual-Cure-Härtung in einem Schritt erfolgen (vgl. z. B. das amerikanische Patent US 6,432,490 B1).

Sowohl die thermische Härtung als auch die Härtung mit aktinischer Strahlung können stufenweise durchgeführt werden. Dabei können sie hintereinander (sequenziell) oder gleichzeitig erfolgen. Bei der sequenziellen Härtung können die erfindungsgemäßen Dual-Cure-härtbaren Materialien zuerst thermisch und dann mit aktinischer Strahlung oder zuerst mit aktinischer Strahlung und dann thermisch gehärtet werden. Alle Härtungsschritte können auch mehrfach durchgeführt werden.

Die resultierenden erfindungsgemäßen Folien, Formteile, Beschichtungen, Klebschichten und Dichtungen eignen sich hervorragend für das Beschichten, Verkleben, Abdichten, Umhüllen und Verpacken von Fortbewegungsmitteln, wie Flugzeugen, Schiffen, Schienenfahrzeugen, Kraftfahrzeugen und Teilen hiervon; Bauwerken im Innen- und Außenbereich und Teilen hiervon; Türen, Fenstern und Möbeln; Glashohlkörpern; Coils; Container und Emballagen; industriellen Kleinteilen, wie Muttern, Schrauben, Felgen oder Radkappen; elektrotechnischen Bauteilen, wie Wickelgüter (Spulen, Statoren, Rotoren); optischen Bauteilen; mechanischen Bauteilen sowie Bauteilen für weiße Ware, wie Radiatoren, Haushaltsgeräte, Kühlschrankverkleidungen oder Waschmaschinenverkleidungen.

Vor allem aber werden die erfindungsgemäßen Dual-Cure-härtbaren Materialien als erfindungsgemäße Beschichtungsstoffe, bevorzugt als erfindungsgemäße Decklacke oder Klarlacke, insbesondere als erfindungsgemäße Klarlacke, zur Herstellung farb- und/oder effektgebender, elektrisch leitfähiger, magnetisch abschirmender oder fluoreszierender Mehrschichtlackierungen, speziell farb- und/oder effektgebender Mehrschichtlackierungen, eingesetzt. Für die Herstellung der erfindungsgemäßen Mehrschichtlackierungen können übliche und bekannte Nass-in-nass-Verfahren und Lackaufbauten angewandt werden, wie sie beispielsweise in der deutschen Patentanmeldung DE 199 48 004 A1, Seite 17, Zeile 37, bis Seite 18, Zeile 2, Seite 18, Zeilen 36 bis 50, und Seite 18, Zeile 66, bis Seite 19, Zeile 3,beschrieben werden.

Bei den resultierenden erfindungsgemäßen Klarlackierungen handelt es sich um die äußersten Schichten der erfindungsgemäßen Mehrschichtlackierungen, die wesentlich den optischen Gesamteindruck (Appearance) bestimmen und die farb- und/oder effektgebenden Schichten vor mechanischer und chemischer Schädigung und Schädigung durch Strahlung schützen. Deswegen machen sich auch Defizite in der Härte, Kratzfestigkeit, Chemikalienbeständigkeit und der Stabilität gegenüber Vergilbung bei der Klarlackierung besonders stark bemerkbar. So aber weisen die erfindungsgemäßen Klarlackierungen nur eine geringe Vergilbung auf. Sie sind hoch kratzfest und zeigen nach dem Zerkratzen nur sehr geringe Glanzverluste. Gleichzeitig haben sie eine hohe Härte. Nicht zuletzt haben sie eine besonders hohe Chemikalienfestigkeit und haften sehr fest auf den farb- und/oder effektgebenden Schichten. Sie haben somit die so genannte Automobilqualität, wie sie in dem europäischen Patent EP 0 352 298 B1, Seite 15, Zeilen 42, bis Seite 17, Zeile 40, definiert ist.

Insgesamt weisen die erfindungsgemäßen Substrate, die mit den erfindungsgemäßen Beschichtungen beschichtet, mit den erfindungsgemäßen Klebschichten verklebt, mit den erfindungsgemäßen Dichtungen abgedichtet und/oder mit den erfindungsgemäßen Folien und/oder den Formteilen umhüllt oder verpackt sind, hervorragende Dauergebrauchseigenschaften und eine besonders lange Gebrauchsdauer auf.

### Beispiel

### Die Herstellung eines Methacrylatcopolymerisats (A)

In einem beheizbaren Edelstahlreaktor, ausgerüstet mit Rührer, Rückflusskühler und einem Initiatorzulauf, einem Monomerzulauf und einem Stickstoffeinleitungsrohr, wurden 18,54 Gewichtsteile Sofventnaphta® vorgelegt und unter Rühren auf 158°C erhitzt. Bei dieser Temperatur wurde 15 Minuten nach Beginn des Initiatorzulaufs (= Mischung aus 2,95 Gewichtsteilen Di-tert.-butyperoxid und 0,48 Gewichtsteilen Solventnaphtha®) eine Monomermischung aus 9,41 Gewichtsteile Styrol, 11,41 Gewichtsteilen Butyl-N-urethan-O-ethylacrylat, 7,44 Gewichtsteilen Butylmethacrylat, 15,4 Gewichtsteilen Glycidylmethacrylat, 2,62 Gewichtsteilen Hydroxyethylmethacrylat und 10,77 Gewichtsteilen Methylmethacrylat während vier Stunden gleichmäßig zudosiert. Der Initiatorzulauf wurde während 4,75 Stunden gleichmäßig zudosiert. Die Temperatur der Reaktionsmischung wurde während dieser Zeit langsam auf 135°C gesenkt. Nach der Beendigung des Initiatorzulaufs wurde solange bei dieser Temperaturen nachpolymerisiert, bis der Initiatorgehalt < 0,2 Gew.-% war, was im Allgemeinen nach etwa 9 Stunden der Fall war. Anschließend wurde die resultierende Lösung des Methacrylatcopolymerisats (a1/a2) auf 100°C gekühlt und mit 20,98 Gewichtsteilen Solventnaphtha® verdünnt. Die Lösung wies einen Festkörpergehalt (135°C/eine Stunde) von 60,9 Gew.-% auf.

In einen beheizbaren Edelstahlreaktor, ausgerüstet mit Rührer, Rückflusskühler, Zulaufgefäß und Einleitungsrohr für Magerluft wurden 155 Gewichtsteile der Lösung des Methacrylatcopolymerisats (a1/a2), entsprechend 88,29 Gewichtsteilen Festharz, 0,1 Gewichtsteile eines handelsüblichen Katalysators (Coscat® Z22 der Firma Rutherford Chemicals) und 0,12 Gewichtsteile Methylhydrochinon vorgelegt und unter Rühren auf 120°C erhitzt. Bei dieser Temperatur wurden während einer Stunde 11,49 Gewichtsteile Acrylsäure gleichmäßig zudosiert. Nach Zulaufende wurde die Redaktionsmischung noch solange auf 120°C erhitzt, bis die Säurezahl unter 4 mg KOH/g gesunken war.

Die resultierende Lösung des Methacrylatcopolymerisats (A) wies einen Festkörpergehalt (135°C/eine Stunde) von 67,6 Gew.-% und eine Viskosität (original) bei 23°C von 474 dPas auf. Das Methacrylatcopolymerisat (A) hatte eine theoretische Hydroxylzahl von 113 mg KOH/g und einen theoretischen Doppelbindungsgehalt (berechnet als >C=C<, 24 Dalton) von 4,51 Gew.-%.

Das Methacrylatcopolymerisat (A) war hervorragend als Dual-Cure-härtbarer Klarlack geeignet. Außerdem war es hervorragend als Bindemittel von Dual-Cure-härtbaren Klarlacken geeignet. Diese wiesen den besonderen Vorteil auf, dass sie nicht nur über die Carbamatgruppen, sondern auch über die Hydroxylgruppen thermisch vernetzar waren. Sie konnten daher außerordentlich breit variiert und den unterschiedlichsten Ansprüchen optimal angepasst werden.

Die hieraus hergestellten thermisch und mit UV-Strahlung oder Elektronenstrahlung gehärteten Klarlackierungen wiesen ein hervorragendes anwendungstechnisches Eigenschaftsprofil auf. Insbesondere waren sie klar, brillant, hochglänzend, haftfest, frei von Lackstörungen, wie Krater, Stippen, Spannungsrisse und Läufer, abriebfest, kratzfest, flexibel, hart, chemikalienbeständig, feuchtigkeitsbeständig, witterungsbeständig und etchbeständig. So erreichten sie ohne weiteres die in dem europäischen Patent EP 0 352 298 B1, Seite 15, Zeilen 42, bis Seite 17, Zeile 40, definierte Automobilqualität.

## Patentansprüche

1. Laterale, primäre und/oder sekundäre Carbamatgruppen (a12) und mit aktinischer Strahlung aktivierbare Gruppen (a31) enthaltende Copolymerisate (A), herstellbar, indem man
I. in einem ersten Verfahrensschritt
(a1) mindestens ein Monomer, enthaltend
(a11) mindestens eine Gruppe der allgemeinen Formel I:
CH₂=C(R)C(O)-O- (I),
worin die Variable R für ein Wasserstoffatom, ein Halogenatom, eine Nitrilgruppe oder eine Alkylgruppe mit 1 bis 10 Kohlenstoffatomen steht, und
(a12) mindestens eine primäre und/oder sekundäre Carbamatgruppe,
und
(a2) mindestens ein Monomer, enthaltend
(a21) mindestens eine radikalisch oder ionisch polymerisierbare, olefinisch ungesättigte Doppelbindung und
(a22) mindestens eine mit den Carbamatgruppen (a12) nicht reagierende und mit der Doppelbindung (a21) nicht polymerisierbare, reaktive, funktionelle Gruppe,
copolymerisiert, wodurch das Copolymerisat (a1/a2) resultiert, und
II. in einem weiteren Verfahrensschritt das Copolymerisat (a1/a2) mit
(a3) mindestens einer Verbindung, enthaltend
(a31) mindestens eine mit aktinischer Strahlung aktivierbare Gruppe und
(a32) mindestens eine zur reaktiven, funktionellen Gruppe (a22) komplementären, reaktiven, funktionellen Gruppe
umsetzt, wodurch das Copolymerisat (A) resultiert.

2. Copolymerisate (A) nach Anspruch 1, **dadurch gekennzeichnet, dass** die Copolymerisate (A) (Meth)Acrylatcopolymerisate sind.

3. Copolymerisate (A) nach Anspruch 1 oder 2, **dadurch gekennzeichnet, dass** die mit aktinischer Strahlung aktivierbaren Gruppen (a31) mit UV-Strahlung und/oder Elektronenstrahlung aktivierbar sind.

4. Copolymerisate (A) nach einem der Ansprüche 1 bis 3, **dadurch gekennzeichnet, dass** das Monomer (a1) eine Gruppe (a11) der allgemeinen Formel I und eine primäre oder sekundäre Carbamatgruppe (a12) enthält.

5. Copolymerisate (A) nach Anspruch 4, **dadurch gekennzeichnet, dass** in dem Monomer (a1) die Gruppe (a11) der allgemeinen Formel I mit der Carbamatgruppe (a12) über eine zweibindige, verknüpfende, inerte Gruppe (a13) verbunden ist.

6. Copolymerisate (A) nach Anspruch 5, **dadurch gekennzeichnet, dass** die Gruppe (a13) aus der Gruppe, bestehend aus
- mit mindestens einem Rest (a131) substituierten und unsubstituierten,
- mindestens ein mindestens zweibindiges Heteroatom (a132) enthaltenden und von Heteroatomen freien,
- mindestens eine mindestens zweibindige, verknüpfende, funktionelle Gruppe (a133) enthaltenden und von solchen Gruppen freien
aliphatischen, cycloaliphatischen, aromatischen, aliphatisch-cycloaliphatischen, aliphatisch-aromatischen, cycloaliphatisch-aromatischen und aliphatisch-cycloaliphatischen-aromatischen Gruppen, ausgewählt ist.

7. Copolymerisate (A) nach einem der Ansprüche 1 bis 6, **dadurch gekennzeichnet, dass** das Monomer (a2) eine radikalisch polymerisierbare, olefinisch ungesättigte Doppelbindung (a21) enthält.

8. Copolymerisate (A) nach einem der Ansprüche 1 bis 7, **dadurch gekennzeichnet, dass** das Monomer (a2) eine mit den Carbamatgruppen (a12) nicht reagierende und mit der Doppelbindung (a21) nicht polymerisierbare, reaktive, funktionelle Gruppe (a22) enthält.

9. Copolymerisate (A) nach einem der Ansprüche 1 bis 8, **dadurch gekennzeichnet, dass** die reaktive, funktionelle Gruppe (a22) aus der Gruppe, bestehend aus Hydroxylgruppen, Thiolgruppen, primären und sekundären Aminogruppen, Säuregruppen, Epoxidgruppen, Carbonamidgruppen, Carbonylhalogenidgruppen, Carbonylgruppen in Aldehyd- oder Ketonfunktion und Isocyanatgruppen, ausgewählt ist.

10. Copolymerisate (A) nach einem der Ansprüche 1 bis 9, **dadurch gekennzeichnet, dass** die Verbindung (a3) eine mit aktinischer Strahlung aktivierbare Gruppe (a31) enthält.

11. Copolymerisate (A) nach einem der Ansprüche 1 bis 10, **dadurch gekennzeichnet, dass** die mit aktinischer Strahlung aktivierbare Gruppe (a31) aus der Gruppe, bestehend aus Gruppen, die mindestens eine mit aktinischer Strahlung aktivierbare Bindung (a311) enthalten, ausgewählt ist.

12. Copolymerisate (A) nach Anspruch 11, **dadurch gekennzeichnet, dass** die mit aktinischer Strahlung aktivierbarer Bindungen (a311) aus der Gruppe, bestehend aus Kohlenstoff-Wasserstoff-Einzelbindungen, Kohlenstoff-Kohlenstoff-, Kohlenstoff-Sauerstoff-, Kohlenstoff-Stickstoff-, Kohlenstoff-Phosphor- und Kohlenstoff-Silizium-Einzelbindungen und -Doppelbindungen sowie Kohlenstoff-Kohlenstoff-Dreifachbindungen, ausgewählt sind.

13. Copolymerisate (A) nach Anspruch 12, **dadurch gekennzeichnet, dass** die mit aktinischer Strahlung aktivierbare Bindungen (a311) Kohlenstoff-KohlenstoffDoppelbindungen sind.

14. Copolymerisate (A) nach einem der Ansprüche 10 bis 13, **dadurch gekennzeichnet, dass** die mit aktinischer Strahlung aktivierbaren Gruppen (a31) aus der Gruppe, bestehend aus (Meth)Acrylat-, Ethacrylat-, Crotonat-, Cinnamat-, Vinylether-, Vinylester-, Ethenylarylen-, Dicyclopentadienyl-, Norbornenyl-, Isoprenyl-, Isopropenyl-, Allyl- und Butenylgruppen; Ethenylarylen-, Dicyclopentadienyl-, Norbornenyl-, Isoprenyl-, Isopropenyl-, Allyl- und Butenylethergruppen sowie Ethenylarylen-, Dicyclopentadienyl-, Norbornenyl-, Isoprenyl-, Isopropenyl-, Allyl- und Butenylestergruppen, ausgewählt sind.

15. Copolymerisate (A) nach Anspruch 14, **dadurch gekennzeichnet, dass** die mit aktinischer Strahlung aktivierbaren Gruppen (a31) (Meth)Acrylatgruppen sind.

16. Copolymerisate (A) nach einem der Ansprüche 1 bis 15, **dadurch gekennzeichnet, dass** die Verbindung (a3) eine zur reaktiven, funktionellen Gruppe (a22) komplementäre, reaktive, funktionelle Gruppe (a32) enthält.

17. Copolymerisate (A) nach Anspruch 16, **dadurch gekennzeichnet, dass** die komplementäre, reaktive, funktionelle Gruppe (a32) aus der Gruppe, bestehend aus Hydroxylgruppen, Thiolgruppen, primären und sekundären Aminogruppen, N-Hydroxyalkylaminogruppen, N-Alkoxyalkylaminogruppen, Säuregruppen, Epoxidgruppen und Isocyanatgruppen, ausgewählt ist.

18. Copolymerisate (A) nach einem der Ansprüche 1 bis 17, **dadurch gekennzeichnet, dass** die Stickstoffatome der sekundären Carbamatgruppen (a12) mit einem einbindigen Rest (a121), ausgewählt aus der Gruppe, bestehend aus
- mit mindestens einem Rest (a1211) substituierten und unsubstituierten,
- mindestens ein mindestens zweibindiges Heteroatom (a1212) enthaltenden und von Heteroatomen freien,
- mindestens eine mindestens zweibindige, verknüpfende, funktionelle Gruppe (a1213) enthaltenden und von solchen Gruppen freien
Alkylaryl-, Arylalkyl-, Alkylcycloalkyl-, Cycloalkylalkyl-, Arylcycloalkyl-, Cycloalkylaryl-, Alkylcycloalkylaryl-, Alkylarylcycloalkyl-, Arylcycloalkylalkyl-, Arylalkylcycloalkyl-, Cycloalkylalkylaryl- und Cycloalkylarylalkyl-Resten, wobei der Strich jeweils die kovalente Bindung zwischen einem Kohlenstoffatom eines Rests und dem Stickstoffatom der Carbamatgruppe symbolisiert, substituiert sind.

19. Verfahren zur Herstellung von laterale, primäre und/oder sekundäre Carbamatgruppen (a12) und mit aktinischer Strahlung aktivierbare Gruppen (a31) enthaltenden Copolymerisaten (A) gemäß einem der Ansprüche 1 bis 18, **dadurch gekennzeichnet, dass** man
I. in einem ersten Verfahrensschritt
(a1) mindestens ein Monomer, enthaltend
(a11) mindestens eine Gruppe der allgemeinen Formel I:
CH₂=C(R)C(O)-O- (I),
worin die Variable R für ein Wasserstoffatom, ein Halogenatom, eine Nitrilgruppe oder eine Alkylgruppe mit 1 bis 10 Kohlenstoffatome steht, und
(a12) mindestens eine primäre und/oder sekundäre Carbamatgruppe,
und
(a2) mindestens ein Monomer, enthaltend
(a21) mindestens eine radikalisch oder ionisch polymerisierbare, olefinisch ungesättigte Doppelbindung und
(a22) mindestens eine mit den Carbamatgruppen (a12) nicht reagierende und mit der Doppelbindung (a21) nicht polymerisierbare, reaktive, funktionelle Gruppe,
copolymerisiert, wodurch das Copolymerisat (a1/a2) resultiert, und
II. in einem weiteren Verfahrensschritt das Copolymerisat (a1/a2) mit
(a3) mindestens einer Verbindung, enthaltend
(a31) mindestens eine mit aktinischer Strahlung aktivierbare Gruppe und
(a32) mindestens eine zur reaktiven, funktionellen Gruppe (a22) komplementären, reaktiven, funktionellen Gruppe
umsetzt, wodurch das Copolymerisat (A) resultiert.

20. Verwendung der laterale, primäre und/oder sekundäre Carbamatgruppen und mit aktinischer Strahlung aktivierbare Gruppen enthaltenden Copolymerisaten (A) gemäß einem der Ansprüche 1 bis 18 und der nach dem Verfahren gemäß Anspruch 19 hergestellten laterale, primäre und/oder sekundäre Carbamatgruppen und mit aktinischer Strahlung aktivierbare Gruppen enthaltenden Copolymerisaten (A) als thermisch und mit aktinischer Strahlung härtbare Materialien oder zu deren Herstellung.

21. Verwendung nach Anspruch 20, **dadurch gekennzeichnet, dass** die thermisch und mit aktinischer Strahlung härtbaren Materialien Dual-Cure-Beschichtungsstoffe sind.

22. Verwendung nach Anspruch 21, **dadurch gekennzeichnet, dass** die Dual-Cure-Beschichtungsstoffe Dual-Cure-Klarlacke sind.

23. Verwendung nach einem der Ansprüche 20 bis 22, **dadurch gekennzeichnet, dass** die Dual-Cure-härtbaren Materialien der Herstellung von Dual-Cure-gehärteten, duroplastischen Materialien dienen.

## Claims

1. A copolymer (A) containing lateral, primary and/or secondary carbamate groups (a12) and groups (a31) which can be activated with actinic radiation, preparable by
I. in a first process step copolymerizing
(a1) at least one monomer containing
(a11) at least one group of the general formula I:
CH₂=C(R)C(O)-O- (I),
in which the variable R is a hydrogen atom, a halogen atom, a nitrile group or an alkyl group having 1 to 10 carbon atoms, and
(a12) at least one primary and/or secondary carbamate group,
and
(a2) at least one monomer containing
(a21) at least one free-radically or ionically polymerizable, olefinically unsaturated double bond and
(a22) at least one reactive functional group which is not reactive with the carbamate groups (a12) and is not polymerizable with the double bond (a21),
to give the copolymer (a1/a2), and
II. in a further process step, reacting the copolymer (a1/a2) with
(a3) at least one compound containing
(a31) at least one group which can be activated with actinic radiation and
(a32) at least one reactive functional group complementary to the reactive functional group (a22),
to give the copolymer (A).

2. The copolymer (A) as claimed in claim 1, being a (meth)acrylate copolymer.

3. The copolymer (A) as claimed in claim 1 or 2, wherein the groups (a31) which can be activated with actinic radiation can be activated with UV radiation and/or electron beams.

4. The copolymer (A) as claimed in any one of claims 1 to 3, wherein the monomer (a1) contains a group (a11) of the general formula I and a primary or secondary carbamate group (a12).

5. The copolymer (A) as claimed in claim 4, wherein the group (a11) of the general formula I in the monomer (a1) is connected to the carbamate group (a12) via a divalent linking inert group (a13).

6. The copolymer (A) as claimed in claim 5, wherein the group (a13) is selected from the group consisting of
aliphatic, cycloaliphatic, aromatic, aliphatic-cycloaliphatic, aliphatic-aromatic, cycloaliphatic-aromatic and aliphatic-cycloaliphatic-aromatic groups
- unsubstituted or substituted by at least one radical (a131),
- containing at least one at least divalent, heteroatom (a132) or free from heteroatoms, and
- containing at least one at least divalent, linking functional group (a133) or free from such groups.

7. The copolymer (A) as claimed in any one of claims 1 to 6, wherein the monomer (a2) contains a free-radically polymerizable, olefinically unsaturated double bond (a21).

8. The copolymer (A) as claimed in any one of claims 1 to 7, wherein the monomer (a2) contains a reactive functional group (a22) which does not react with the carbamate groups (a12) and which is not polymerizable with the double bond (a21).

9. The copolymer (A) as claimed in any one of claims 1 to 8, wherein the reactive functional group (a22) is selected from the group consisting of hydroxyl groups, thiol groups, primary and secondary amino groups, acid groups, epoxide groups, carboxamide groups, carbonyl halide groups, carbonyl groups in aldehyde or ketone function, and isocyanate groups.

10. The copolymer (A) as claimed in any one of claims 1 to 9, wherein the compound (a3) contains a group (a31) which can be activated with actinic radiation.

11. The copolymer (A) as claimed in any one of claims 1 to 10, wherein the group (a31) which can be activated with actinic radiation is selected from the group consisting of groups which contain at least one bond (a311) which can be activated with actinic radiation.

12. The copolymer (A) as claimed in claim 11, wherein the bonds (a311) which can be activated with actinic radiation are selected from the group consisting of single carbon-hydrogen bonds, single and double carbon-carbon, carbon-oxygen, carbon-nitrogen, carbon-phosphorus, and carbon-silicon bonds, and triple carbon-carbon bonds.

13. The copolymer (A) as claimed in claim 12, wherein the bonds (a311) which can be activated with actinic radiation are double carbon-carbon bonds.

14. The copolymer (A) as claimed in any one of claims 10 to 13, wherein the groups (a31) which can be activated with actinic radiation are selected from the group consisting of (meth)acrylate, ethacrylate, crotonate, cinnamate, vinyl ether, vinyl ester, ethenylarylene, dicyclopentadienyl, norbornenyl, isoprenyl, isopropenyl, allyl and butenyl groups; ethenylarylene ether, dicyclopentadienyl ether, norbornenyl ether, isoprenyl ether, isopropenyl ether, allyl ether, and butenyl ether groups; and ethenylarylene ester, dicyclopentadienyl ester, norbornenyl ester, isoprenyl ester, isopropenyl ester, allyl ester, and butenyl ester groups.

15. The copolymer (A) as claimed in claim 14, wherein the groups (a31) which can be activated with actinic radiation are (meth)acrylate groups.

16. The copolymer (A) as claimed in any one of claims 1 to 15, wherein the compound (a3) contains a reactive functional group (a32) which is complementary to the reactive functional group (a22).

17. The copolymer (A) as claimed in claim 16, wherein the complementary reactive functional group (a32) is selected from the group consisting of hydroxyl groups, thiol groups, primary and secondary amino groups, N-hydroxyalkylamino groups, N-alkoxyalkylamino groups, acid groups, epoxide groups, and isocyanate groups.

18. The copolymer (A) as claimed in any one of claims 1 to 17, wherein the nitrogen atoms of the secondary carbamate groups (a12) are substituted by a monovalent radical (a121) selected from the group consisting of alkylaryl-, arylalkyl-, alkylcycloalkyl-, cycloalkylalkyl-, arylcycloalkyl-, cycloalkylaryl-, alkylcycloalkylaryl-, alkylarylcycloalkyl-, arylcycloalkylalkyl-, arylalkylcycloalkyl-, cycloalkylalkylaryl-, and cycloalkylarylalkyl- radicals
- unsubstituted or substituted by at least one radical (a1211),
- containing at least one at least divalent, heteroatom (a1212) or free from heteroatoms, and
- containing at least one at least divalent, linking functional group (a1213) or free from such groups,
the hyphen symbolizing in each case the covalent bond between a carbon atom of a radical and the nitrogen atom of the carbamate group.

19. A process for preparing a copolymer (A) as claimed in any one of claims 1 to 18, containing lateral, primary and/or secondary carbamate groups (a12) and groups (a31) which can be activated with actinic radiation, which comprises
I. in a first process step copolymerizing
(a1) at least one monomer containing
(a11) at least one group of the general formula I:
CH₂=C(R)C(O)-O- (I),
in which the variable R is a hydrogen atom, a halogen atom, a nitrile group or an alkyl group having 1 to 10 carbon atoms, and
(a12) at least one primary and/or secondary carbamate group,
and
(a2) at least one monomer containing
(a21) at least one free-radically or ionically polymerizable, olefinically unsaturated double bond and
(a22) at least one reactive functional group which is not reactive with the carbamate groups (a12) and is not polymerizable with the double bond (a21),
to give the copolymer (a1/a2), and
II. in a further process step, reacting the copolymer (a1/a2) with
(a3) at least one compound containing
(a31) at least one group which can be activated with actinic radiation and
(a32) at least one reactive functional group complementary to the reactive functional group (a22),
to give the copolymer (A).

20. The use of a copolymer (A) as claimed in any one of claims 1 to 18, containing lateral, primary and/or secondary carbamate groups and groups which can be activated with actinic radiation, or of a copolymer (A) containing lateral, primary and/or secondary carbamate groups and groups which can be activated with actinic radiation, and prepared by the process as claimed in claim 19, as materials curable thermally and with actinic radiation, or for preparing such materials.

21. The use as claimed in claim 20, wherein the materials curable thermally and with actinic radiation are dual-cure coating materials.

22. The use as claimed in claim 21, wherein the dual-cure coating materials are dual-cure clearcoat materials.

23. The use as claimed in any one of claims 20 to 22, wherein the dual-cure materials are used to produce dual-cure thermoset materials.

## Revendications

1. Copolymères (A) contenant des groupes carbamate latéraux (a12), primaires et/ou secondaires, et des groupes activables par un rayonnement actinique (a31), pouvant être préparés par
I. dans une première étape de processus, copolymérisation
(a1) d'au moins un monomère, contenant
(a11) au moins un groupe de formule générale I :
CH₂=C(R)C(O)-O- (I)
dans laquelle la variable R représente un atome d'hydrogène, un atome d'halogène, un groupe nitrilo ou un groupe alkyle ayant de 1 à 10 atomes de carbone, et
(a12) au moins un groupe carbamate primaire et/ou un groupe carbamate secondaire,
et
(a2) d'au moins un monomère contenant
(a21) au moins une double liaison à insaturation oléfinique, apte à la polymérisation radicalaire ou ionique et
(a22) au moins un groupe fonctionnel réactif, non polymérisable avec la double liaison (a21) et ne réagissant pas avec les groupes carbamate (a12),
de sorte qu'il en résulte le copolymère (a1/a2), et
II. dans une autre étape de processus, mise en réaction du copolymère (a1/a2) avec
(a3) au moins un composé contenant
(a31) au moins un groupe activable par un rayonnement actinique et
(a32) au moins un groupe fonctionnel réactif, complémentaire du groupe fonctionnel réactif (a22)
de sorte qu'il en résulte le copolymère (A).

2. Copolymères (A) selon la revendication 1, **caractérisés en ce que** les copolymères (A) sont des copolymères de (méth)acrylate.

3. Copolymères (A) selon la revendication 1 ou 2, **caractérisés en ce que** les groupes activables par un rayonnement actinique (a31) sont activables par un rayonnement UV et/ou irradiation par un faisceau d'électrons.

4. Copolymères (A) selon l'une quelconque des revendications 1 à 3, **caractérisés en ce que** le monomère (a1) contient un groupe (a11) de formule générale I et un groupe carbamate primaire ou secondaire (a12).

5. Copolymères (A) selon la revendication 4, **caractérisés en ce que** dans le monomère (a1) le groupe (a11) de formule générale I est lié au groupe carbamate (a12) par l'intermédiaire d'un groupe inerte de raccordement (a13) à deux liaisons.

6. Copolymères (A) selon la revendication 5, **caractérisés en ce que** le groupe (a13) est choisi dans le groupe constitué par des groupes aliphatiques, cycloaliphatiques, aromatiques, aliphatique-cycloaliphatiques, aliphatique-aromatiques, cycloaliphatique-aromatiques et aliphatique-cycloaliphatique-aromatiques
- substitués par au moins un radical (a131) ou non substitués,
- contenant au moins un hétéroatome (a132) au moins à deux liaisons ou exempts d'hétéroatomes,
- contenant au moins un groupe fonctionnel (a133) de raccordement, au moins à deux liaisons, ou exempts de tels groupes.

7. Copolymères (A) selon l'une quelconque des revendications 1 à 6, **caractérisés en ce que** le monomère (a2) contient une double liaison à insaturation oléfinique (a21), apte à la polymérisation radicalaire.

8. Copolymères (A) selon l'une quelconque des revendications 1 à 7, **caractérisés en ce que** le monomère (a2) contient un groupe fonctionnel réactif (a22), non polymérisable avec la double liaison (a21) et ne réagissant pas avec les groupes carbamate (a12).

9. Copolymères (A) selon l'une quelconque des revendications 1 à 8, **caractérisés en ce que** le groupe fonctionnel réactif (a22) est choisi dans le groupe constitué par des groupes hydroxy, des groupes thio, des groupes amino primaires et des groupes amino secondaires, des groupes acides, des groupes époxy, des groupes carbamoyle, des groupes halogénure de carbonyle, des groupes carbonyle en fonction aldéhyde ou cétone et des groupes isocyanate.

10. Copolymères (A) selon l'une quelconque des revendications 1 à 9, **caractérisés en ce que** le composé (a3) contient un groupe (a31) activable par un rayonnement actinique.

11. Copolymères (A) selon l'une quelconque des revendications 1 à 10, **caractérisés en ce que** le groupe (a31) activable par un rayonnement actinique est choisi dans le groupe constitué par des groupes qui comportent au moins une liaison (a311) activable par un rayonnement actinique.

12. Copolymères (A) selon la revendication 11, **caractérisés en ce que** les liaisons (a311) activables par un rayonnement actinique sont choisies dans le groupe constitué par les liaisons simples carbone-hydrogène, les liaisons simples et doubles liaisons carbone-carbone, carbone-oxygène, carbone-azote, carbone-phosphore et carbone-silicium ainsi que les triples liaisons carbone-carbone.

13. Copolymères (A) selon la revendication 12, **caractérisés en ce que** les liaisons (a311) activables par un rayonnement actinique sont des doubles liaisons carbone-carbone.

14. Copolymères (A) selon l'une quelconque des revendications 10 à 13, **caractérisés en ce que** les groupes (a31) activables par un rayonnement actinique sont choisis dans le groupe constitué par les groupes (méth)acrylate, éthacrylate, crotonate, cinnamate, éther vinylique, ester vinylique, éthénylarylène, dicyclopentadiényle, norbornényle, isoprényle, isopropényle, allyle et butényle ; les groupes éther éthénylarylénique, dicyclopentadiénylique, norbornénylique, isoprénylique, isopropénylique, allylique et buténylique, ainsi que les groupes ester éthénylarylénique, dicyclopentadiénylique, norbornénylique, isoprénylique, isopropénylique, allylique ou buténylique.

15. Copolymères (A) selon la revendication 14, **caractérisés en ce que** les groupes (a31) activables par un rayonnement actinique sont des groupes (méth)acrylate.

16. Copolymères (A) selon l'une quelconque des revendications 1 à 15, **caractérisés en ce que** le composé (a3) contient un groupe fonctionnel réactif (a32) complémentaire du groupe fonctionnel réactif (a22).

17. Copolymères (A) selon la revendication 16, **caractérisés en ce que** le groupe fonctionnel réactif (a32) complémentaire est choisi dans le groupe constitué par des groupes hydroxy, des groupes thio, des groupes amino primaires et des groupes amino secondaires, des groupes N-hydroxyalkylamino, des groupes N-alcoxyalkylamino, des groupes acides, des groupes époxy et des groupes isocyanate.

18. Copolymères (A) selon l'une quelconque des revendications 1 à 17, **caractérisés en ce que** les atomes d'azote des groupes carbamate secondaires (a12) sont substitués par un radical (a121) à une liaison, choisi dans le groupe constitué par des radicaux alkylaryl-, arylalkyl-, alkylcycloalkyl-, cycloalkylalkyl-, arylcycloalkyl-, cycloalkylaryl-, alkyl-cycloalkylaryl-, alkylarylcycloalkyl-, arylcycloalkyl-alkyl-, arylalkylcycloalkyl-, cycloalkylalkylaryl- et cycloalkylarylalkyl-, le tiret symbolisant chaque fois la liaison covalente entre un atome de carbone d'un radical et l'atome d'azote du groupe carbamate,
- substitués par au moins un radical (a1211) ou non substitués,
- contenant au moins un hétéroatome (a1212) au moins à deux liaisons ou exempts d'hétéroatomes,
- contenant au moins un groupe fonctionnel (a1213) de raccordement, au moins à deux liaisons, ou exempts de tels groupes.

19. Procédé pour la préparation de copolymères (A) contenant des groupes carbamate latéraux (a12), primaires et/ou secondaires, et des groupes activables par un rayonnement actinique (a31), selon l'une quelconque des revendications 1 à 18, **caractérisé en ce que**
I. dans une première étape de processus on copolymérise
(a1) au moins un monomère, contenant
(a11) au moins un groupe de formule générale I :
CH₂=C(R)C(O)-O- (I)
dans laquelle la variable R représente un atome d'hydrogène, un atome d'halogène, un groupe nitrilo ou un groupe alkyle ayant de 1 à 10 atomes de carbone, et
(a12) au moins un groupe carbamate primaire et/ou un groupe carbamate secondaire,
et
(a2) au moins un monomère contenant
(a21) au moins une double liaison à insaturation oléfinique, apte à la polymérisation radicalaire ou ionique et
(a22) au moins un groupe fonctionnel réactif, non polymérisable avec la double liaison (a21) et ne réagissant pas avec les groupes carbamate (a12),
de sorte qu'il en résulte le copolymère (a1/a2), et
II. dans une autre étape de processus, on fait réagir le copolymère (a1/a2) avec
(a3) au moins un composé contenant
(a31) au moins un groupe activable par un rayonnement actinique et
(a32) au moins un groupe fonctionnel réactif, complémentaire du groupe fonctionnel réactif (a22)
de sorte qu'il en résulte le copolymère (A).

20. Utilisation des copolymères (A) contenant des groupes carbamate latéraux primaires et/ou secondaires et des groupes activables par un rayonnement actinique, selon l'une quelconque des revendications 1 à 18 et des copolymères (A) contenant des groupes carbamate latéraux primaires et/ou secondaires et des groupes activables par un rayonnement actinique, préparés conformément au procédé selon la revendication 19, en tant que matériaux durcissables thermiquement et par un rayonnement actinique, ou pour leur production.

21. Utilisation selon la revendication 20, **caractérisée en ce que** les matériaux durcissables thermiquement et par un rayonnement actinique sont des matières de revêtement Dual-Cure.

22. Utilisation selon la revendication 21, **caractérisée en ce que** les matières de revêtement Dual-Cure sont des vernis Dual-Cure.

23. Utilisation selon l'une quelconque des revendications 20 à 22, **caractérisée en ce que** les matériaux durcissables par Dual-Cure servent à la production de matériaux thermodurcissables durcis par Dual-Cure.
